# EUROPEAN PATENT SPECIFICATION

(11) **EP 3 581 596 B1**
(45) Date of publication and mention of the grant of the patent: **29.09.2021**
(21) Application number: 18751972.3
(22) Date of filing: 08.02.2018
(51) Int. Cl.: C08F 220/18, H01M 4/62, C08F 2/24, H01M 4/02, C08F 218/10, H01M 10/0525, C08F 220/58

(54) **AQUEOUS BINDER OF LITHIUM ION BATTERY ANODE AND PREPARATION METHOD THEREFOR**
WÄSSRIGES BINDEMITTEL FÜR ANODE EINER LITHIUM-IONEN-BATTERIE UND HERSTELLUNGSVERFAHREN DAFÜR
LIANT AQUEUX D'ANODE DE BATTERIE AU LITHIUM-ION ET PROCÉDÉ POUR SA PRÉPARATION

(30) Priority: 08.02.2017 CN 201710068574
(43) Date of publication of application: 18.12.2019
(73) Proprietor: Fujian Blue Ocean & Black Stone Technology Co., Ltd., Zhangzhou City, Fujian Province 363900 (CN)
(72) Inventor: BAI, Fengrui, Beijing 101111 (CN); LI, Qiang, Beijing 101111 (CN); LUO, Hebin, Beijing 101111 (CN)
(74) Representative: Hanna Moore + Curley
(86) International application number: PCT/CN2018/075839
(87) International publication number: WO 2018/145646

(56) References cited:
- EP-A1- 3 116 054
- WO-A1-2004/107481
- CN-A- 102 746 813
- CN-A- 105 514 486
- CN-A- 105 576 284
- CN-A- 106 833 448
- JP-A- 2010 021 059
- US-A1- 2012 095 131
- US-A1- 2016 079 007

## Description

### FIELD OF THE INVENTION

The present invention relates to the technical field of lithium ion batteries, in particular to an aqueous binder for a positive electrode of a lithium ion battery and a preparation method thereof.

### BACKGROUND OF THE INVENTION

As an emerging industry, the new energy project is in line with the national policies on energy conservation, emission reduction and sustainable development, and is of great help to the adjustment and transformation of the industrial structure. As an important part of the new energy industry, lithium ion secondary battery has the advantages of high energy density, long life, small size, light weight, safety and reliability, no pollution, and the like, and has been widely used in electric vehicles, aerospace, communication equipment and various portable appliances, becoming the most promising ideal energy in the 21st century.

A lithium ion battery is usually obtained by uniformly mixing and grinding an electroactive material, a conductive agent, and a binder solution into a slurry, applying it onto a copper foil or an aluminum foil as a current collector, and processing it by drying and rolling, etc. Wherein, the lithium ion battery binder is one of the essential raw materials in the preparation process of the lithium ion battery, and its function is to adhere the positive and negative electrode electroactive materials and the conductive agent to the current collector.

The binder for the positive electrode of lithium ion battery is mainly divided into two types. One is an oily binder using an organic solvent as a dispersant. At present, the widely used oily binder is a fluoropolymer binder, such as polyvinylidene fluoride (referred to as: PVDF) using N-methylpyrrolidone (referred to as: NMP) as a solvent. Since the binder has a large amount of organic solvent and is easily volatilized during the production process, it pollutes the environment and causes great damage to the health of the operator, moreover, the fluoropolymer and its solvent are expensive, which increases the production cost. In addition, the PVDF binder also has a problem that the charge-discharge cycle characteristics are lowered. The other type is an aqueous binder using water as a dispersant. At present, Chinese patent CN201410731027.8 discloses an ideal aqueous binder for a lithium ion battery prepared by dropping an oleophilic monomer and a hydrophilic monomer and an initiator into SBS, and grafting the oleophilic and hydrophilic monomers onto the SBS macromolecular segment by a suitable chemical reaction. The binder can be used in the manufacture of a positive electrode of a lithium ion battery, imparting excellent adhesion and dispersion properties to the electrode material. However, when the binder is used for the manufacture of the positive plate of the lithium ion battery, it has a low stacking density, and the plate is brittle after being dried, and is easy to be crimped and cracked during the drying process, which reduces the yield of the product and the production efficiency of the factory. There are other patents studying binders with good performances, such as CN105576284A, JP2010021059A, US2016/079007A1, EP3116054A1 and US2012/095131A1, however their overall performance (especially the performance of flexibility and capacity retention ratio) still need to be improved.

### SUMMARY OF THE INVENTION

In view of this, an embodiment of the present invention provides an aqueous binder for a positive electrode of a lithium ion battery and a preparation method thereof to solve the technical problems of low stacking density, being brittle after dried, poor softness, low yield, low production efficiency and the like of a positive electrode of lithium ion battery in the prior art.

The preparation method of the aqueous binder provided by an embodiment of the present invention includes using water as a dispersion medium, adding an acrylate monomer, an amphiphilic reactive emulsifier, a functional monomer having a special functional group for improving the flexibility of a macromolecular chain, and an initiator, stirring and uniformly mixing, heating to initiate polymerization, and reacting to obtain the aqueous binder; wherein the functional monomer is vinyl versatate;
wherein, the acrylate monomer is selected from one or more of methyl methacrylate, methyl acrylate, ethyl acrylate, butyl acrylate, hydroxyethyl acrylate, acrylonitrile, acrylic acid, methacrylic acid, acrylamide, itaconic acid, methacrylic acid, hydroxypropyl acrylate or octyl acrylate;
wherein, the amphiphilic reactive emulsifier is selected from one or more of sodium acrylamide isopropyl sulfonate, special alcohol ether sulfate containing allyl group, sodium alcohol ether sulfonyl succinate containing double bond, sodium allyloxy hydroxypropane sulfonate or sodium alkylamide vinyl sulfonate;
wherein, the initiator is selected from one or more of an inorganic peroxygen initiator, an azo initiator, an organic peroxy initiator, a water-soluble redox initiator or an oil-soluble redox initiator;
wherein, the initiator is selected from one or more of azodiisobutyronitrile, benzoyl peroxide, sodium persulfate, ammonium persulfate, persulfate or sodium sulfite;
wherein, the functional monomer is used in an amount accounting for 5% to 40% of the total amount of the monomers, and/or, the amphiphilic reactive emulsifier is used in an amount accounting for 0.1% to 8% of the total weight; and the aqueous binder has a solid content of 10% to 25%;
wherein, the amphiphilic reactive emulsifier is used in an amount accounting for 0.5% to 2% of the total weight;
wherein, the stirring speed during the reaction is 200 to 800 rpm, and the initiation temperature is 40°C to 90°C.

The aqueous binder provided by an embodiment of the present invention is obtained by the preparation method according to any one of the above, which has a solid content of 10% to 25% and a viscosity ranging from 800 mPa·s to 20,000 mPa·s, having a glass transition temperature of less than -9°C, which can be measured using the method as described in the description.

In a specific embodiment of the present invention, the functional monomer is an acrylate, and a reactant which provides "-OH" in the formation of the acrylate contains 7 or more carbon atoms.

In one specific embodiment of the present invention, the reactant providing "-OH" contains from 7 to 18 carbon atoms.

The aqueous binder provided by a specific embodiment of the present invention has a glass transition temperature of from -14°C to -24°C.

The preparation method of the aqueous binder for the positive electrode of lithium ion battery provided by an embodiment of the present invention has simple operation steps, and the prepared binder has good flexibility and moderate viscosity, which can increase the stacking density of a positive plate when it is used in the manufacture of the positive plate of lithium ion battery. Moreover, the plate is smooth without crimping or cracking. The battery prepared by using the plate has good cycle performance, which improves the yield of the product and the production efficiency of the factory.

### BRIEF DESCRIPTION OF THE DRAWINGS

FIG.1 shows a TGA spectrum of the aqueous binder for the positive electrode of lithium ion battery provided in Example 1 of the present invention.
FIG.2 shows a charge-discharge cycle diagram of lithium ion test battery provided in Example 3.
FIG.3 shows a DSC analysis diagram of the aqueous binder for the positive electrode of lithium ion battery provided in Example 1 of the present invention.
FIG.4 shows a DSC analysis diagram of the aqueous binder for the positive electrode of lithium ion battery provided in Example 2 of the present invention.

### DETAILED DESCRIPTION OF THE INVENTION

The technical solutions in the embodiments of the present invention will be clearly and completely described in the following with reference to the accompanying drawings in the embodiments of the present invention. It is obvious that the described embodiments are only a part of the embodiments of the present invention, and not all of them.

The preparation method of an aqueous binder for a positive electrode of lithium ion battery provided by an embodiment of the present invention is: using water as a dispersion medium, adding a reactive emulsifier having an amphiphilic structure, a functional monomer having a special functional group for improving the flexibility of a macromolecular chain, and an initiator while adding a conventional acrylate monomer, stirring, initiating a polymerization reaction by controlling the initiation temperature and the time of adding the monomers under the action of the initiator, thereby changing the arrangement and combination of the special functional monomer in the molecule, to obtain the aqueous binder for the positive electrode of lithium ion battery. In an example of the present invention, to maintain a high mixing state during the reaction process, the rotation speed is maintained at 200 to 800rpm, and the initiation temperature is 40°C to 90°C.

In an example of the present invention, the above conventional acrylate monomer is selected from one or more of methyl methacrylate, methyl acrylate, ethyl acrylate, butyl acrylate, hydroxyethyl acrylate, acrylonitrile, acrylic acid, methacrylic acid, acrylamide, itaconic acid, methacrylic acid, hydroxypropyl acrylate or octyl acrylate.

In an example of the present invention, the above amphiphilic reactive emulsifier contains a copolymerizable carbon-carbon double bond, and one end of the molecule is a non-polar hydrophobic group, and the other end is a polar hydrophilic group. Specifically, it may be selected from one or more of sodium acrylamide isopropyl sulfonate, special alcohol ether sulfate containing allyl group (such as NRS-10), sodium alcohol ether sulfonyl succinate containing double bond (such as NRS-138), sodium allyloxy hydroxypropane sulfonate or sodium alkylamide vinyl sulfonate. The amphiphilic reactive emulsifier is used in an amount accounting for 0.1% to 8% of the total weight. In a preferred example, the amphiphilic reactive emulsifier is used in an amount accounting for 0.5% to 2% of the total weight.

In an example of the present invention, the main feature of the functional monomer having the special functional group for improving the flexibility of macromolecular chain is that: its main chain contains a polymerizable carbon-carbon double bond and contains one or more long hydrocarbyl side chains or contains a special structure (such as a special flexible structure such as a dendritical structure). It may specifically be selected from one or more of octadecyl acrylate, octyl acrylate, laurate, heptadecyl acrylate, octadecyl methacrylate, cyclohexyl acrylate, vinyl versatate, benzyl acrylate or perfluoroalkyl acrylate. In an example, the functional monomer accounts for 5% to 40% of the total amount of monomers.

In an example of the present invention, the above initiator is selected from one or more of an inorganic peroxy initiator, an azo initiator, an organic peroxy initiator, a water-soluble redox initiator or an oil-soluble redox initiator, and may be specifically selected from one or more of azodiisobutyronitrile, benzoyl peroxide, sodium persulfate, ammonium persulfate, persulfate or sodium sulfite.

An example of the present invention further provides an aqueous binder for a positive electrode of lithium ion battery, which is obtained by the preparation method according to any one of the above, and has a solid content of 10% to 25% and a viscosity ranging from 800 mPa s to 20,000 mPa s.

The positive electrode electroactive material suitable for the aqueous binder for the positive electrode of lithium ion battery of the present invention is LiFePO₄, LiCoO₂, LiNiO₂, LiMn₂O₄ and a multicomponent mixture thereof.

An example of the present invention further provides a positive plate of a lithium ion battery, which is prepared by mixing the above aqueous binder with a positive electrode active material into a slurry, coating it onto a current collector and drying, wherein content of the aqueous binder in the slurry is from 1% to 8%, preferably from 2% to 6%.

The preparation method of the aqueous binder for the positive electrode of lithium ion battery provided by an embodiment of the present invention has simple operation steps, and the prepared binder has good flexibility and moderate viscosity, which can increase the stacking density of a positive plate when it is used in the manufacture of the positive plate of lithium ion battery. Moreover, the plate is smooth without crimping or cracking. The battery prepared by using the plate has good cycle performance, which improves the yield of the product and the production efficiency of the factory.

Hereinafter, the preparation method of the aqueous binder for the positive electrode of lithium ion battery and the aqueous binder prepared by the method provided by the present invention will be further illustrated by the following examples, which will be helpful in understanding the present invention. However, the present invention is not limited to the following examples.

### Reference Example 1

In this example, sodium acrylamide isopropyl sulfonate, laurate and sodium persulfate were respectively used as an amphiphilic reactive emulsifier, a functional monomer having a special functional group for improving the flexibility of a macromolecular chain, and an initiator, a mixture of acrylic acid, acrylamide and butyl acrylate was used as an acrylate monomer. The ratio of the acrylate monomer, the amphiphilic reactive emulsifier and the functional monomer in the whole preparation process was: 19:0.1: 1.

Specifically, a solution of an aqueous binder for a positive electrode of lithium ion battery was prepared according to the following steps: to a reaction kettle, 320 parts of water, 0.4 parts of sodium acrylamide isopropyl sulfonate, 25 parts of acrylic acid, 15 parts of acrylamide and 36 parts of butyl acrylate, and 4 parts of laurate were sequentially added by weight, and blended under stirring at 400 rpm. When the temperature was raised to 82°C, sodium persulfate was added to initiate polymerization. The reaction was carried out for 40 min. Then the rotation speed was increased to 550 rpm. The initiation conditions were maintained at 82°C for 3 h. Then, a weak alkali adjusting binder was added to adjust the mixture to neutrality (wherein the weak alkali adjusting binder was an alkaline substance such as ammonia water, sodium bicarbonate or sodium carbonate). The mixture was insulated for 30 min and then cooled, and then the aqueous binder solution was obtained.

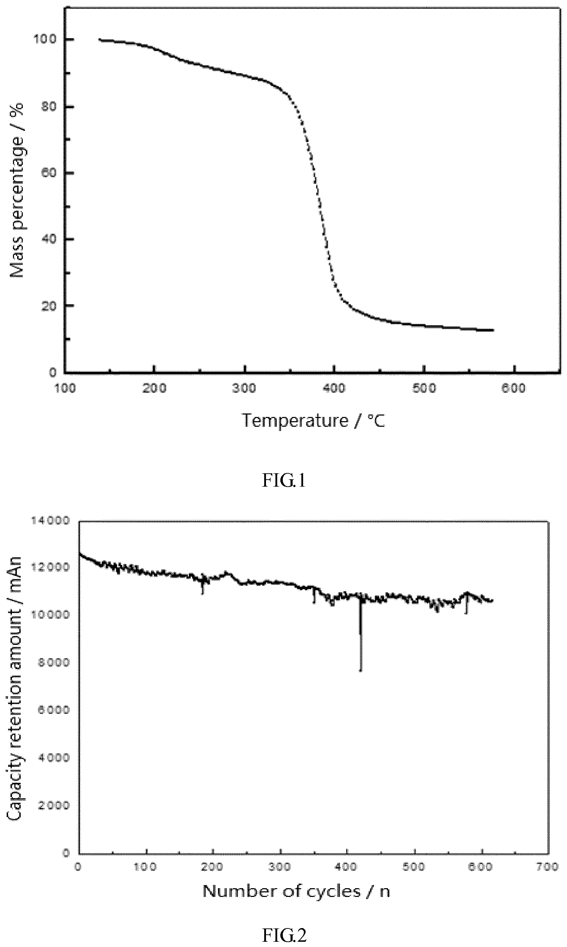

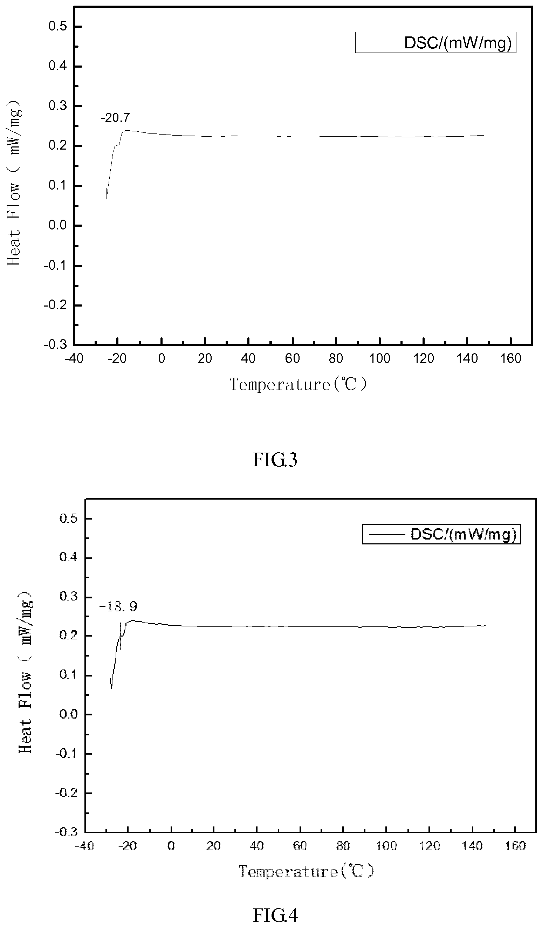

The above aqueous binder has good flexibility. It was subjected to DSC analysis. The experimental results are shown in FIG.3. As can be seen from FIG.3, the aqueous binder prepared in this example has a glass transition temperature of -20.7°C, which is lower than the normal use temperature, thereby ensuring the flexibility of the binder during use. The binder has a moderate viscosity, 1500 mPa.s. The TGA spectrum of the binder is shown in FIG.1. As can be seen from spectrum, the aqueous binder is excellent in thermal stability and has a decomposition temperature higher than 350°C.

### Example 2

In this example, sodium persulfate was again used as an initiator, except that sodium allyloxyhydroxypropane sulfonate and veova10 (vinyl versatate) were used as an amphiphilic reactive emulsifier and a functional monomer having a special functional group for improving the flexibility of a macromolecular chain, a mixture of acrylic acid, acrylamide, butyl acrylate, ethyl acrylate and itaconic acid was used as an acrylate monomer, wherein itaconic acid and a part of acrylic acid were added together with a part of water after a certain period of initiation of polymerization. The ratio of the acrylate monomer, the amphiphilic reactive emulsifier and the functional monomer in the whole preparation process was: 17:0.25:2.5.

Specifically, a solution of an aqueous binder for a positive electrode of lithium ion battery was prepared according to the following steps: to a reaction kettle, 260 parts of water, 1 part of sodium allyloxyhydroxypropane sulfonate, 10 parts of acrylic acid, 12 parts of acrylamide, 30 parts of butyl acrylate and 4 parts of ethyl acrylate, and 10 parts of veova10 were sequentially added by weight, and blended under stirring at 200 rpm. When the temperature was raised to 82°C, sodium persulfate was added to initiate polymerization. The reaction was carried out for 20 min. Then the rotation speed was increased to 300 rpm while adding 8 parts of acrylic acid, 4 parts of itaconic acid and 60 parts of water. The initiation conditions were maintained at 86°C for 4 h. Then, a weak alkali adjusting binder was added to adjust the mixture to neutrality (wherein the weak alkali adjusting binder was an alkaline substance such as ammonia water, sodium bicarbonate or sodium carbonate). The mixture was insulated for 30 min and then cooled, and then the aqueous binder solution was obtained.

The above aqueous binder has a viscosity of 4,000 mPa·s, a solid content of 20%, and good mechanical stability.

The above aqueous binder was subjected to DSC analysis. The experimental results are shown in FIG.4. As can be seen from FIG.4, the aqueous binder prepared in this example has a glass transition temperature of -18.9°C, which is lower than the normal use temperature, thereby ensuring the flexibility of the binder during use.

### Example 3

A positive electrode slurry was prepared using the aqueous binder solution prepared in Example 2 and a manganese + ternary system as an electroactive material of the positive electrode. The ratio of the materials in the entire positive electrode slurry was: aqueous binder, 2.0%; positive electrode material, 95%; and conductive agent S-P, 3%.

The positive electrode slurry prepared above has a solid content of 70% and a viscosity of 8,000 mPa·s. The slurry has good thixotropic properties. During the coating process, a drying tunnel of 18 m was used, wherein the drying tunnel temperature was set to 90°C-110°C-120°C-100°C-90°C, and a coating speed of 8 m/min was used. The positive plate made of the slurry is smooth, has no crimping or cracking, and has a high stacking density and a high yield.

The above positive plate was matched with a lithium manganate (BN-M01) active material, and assembled into a lithium ion test battery for application testing. The result is shown in FIG.2, which is a charge-discharge cycle diagram of the above lithium ion test battery, wherein, the ordinate is the capacity retention amount, and the abscissa is the number of charge-discharge cycles (times). As can be seen from FIG.2, the test battery has a first charge-discharge capacity of more than 90%, excellent capacity and stable discharge curve platform. After 200 cycles with 1c, the capacity of the battery did not decrease substantially. After 500 cycles, the capacity retention rate of the battery did not decrease significantly, and remained substantially above 90%, indicating a small capacity fading.

### Reference Example 4

In this example, sodium acrylamide isopropyl sulfonate, lauryl acrylate and sodium persulfate were respectively used as an amphiphilic reactive emulsifier, a functional monomer having a special functional group for improving the flexibility of a macromolecular chain, and an initiator, and a mixture of acrylic acid, acrylamide, and butyl acrylate was used as an acrylate monomer. The ratio of the acrylate monomer, the amphiphilic reactive emulsifier and the functional monomer in the whole preparation process was: 19:0.15:1.

Specifically, a solution of an aqueous binder for a positive electrode of lithium ion battery was prepared according to the following steps: to a reaction kettle, 320 parts of water, 0.4 part of sodium acrylamide isopropyl sulfonate, 25 parts of acrylic acid, 15 parts of acrylamide and 36 parts of butyl acrylate, and 6 parts of lauryl acrylate were sequentially added by weight, and blended under stirring at 400 rpm. When the temperature was raised to 82°C, sodium persulfate was added to initiate polymerization. The reaction was carried out for 40 min. Then the rotation speed was increased to 550 rpm. The initiation conditions were maintained at 82°C for 3 h. Then, a weak alkali adjusting binder was added to adjust the mixture to neutrality (wherein the weak alkali adjusting binder was an alkaline substance such as ammonia water, sodium bicarbonate or sodium carbonate). The mixture was insulated for 30 min and then cooled, and then the aqueous binder solution was obtained.

The above aqueous binder was subjected to DSC analysis. It has a glass transition temperature of -21.2°C, which is lower than the normal use temperature, thereby ensuring the flexibility of the binder during use. The binder has a moderate viscosity, 2,300 mPa.s, and a decomposition temperature of more than 350°C.

### Reference Example 5

In this example, the preparation method was the same as that in Example 4, except that one of octadecyl acrylate, octyl acrylate, heptadecyl acrylate, octadecyl methacrylate, cyclohexyl acrylate, benzyl acrylate or perfluoroalkylethyl acrylate was used as a functional monomer having a special functional group having amphiphilicity and improving the flexibility of a macromolecular chain to prepare an aqueous binder for a positive electrode of lithium ion battery, which was subjected to DSC analysis. The experimental results are shown in Table 1.

**Table 1 Glass transition temperature of different aqueous binders**

| Functional monomer | Glass transition temperature (°C) |
|---|---|
| Octadecyl acrylate | -23.8 |
| Octyl acrylate | -14.4 |
| Heptadecyl acrylate | -16.8 |
| Octadecyl methacrylate | -12.7 |
| Cyclohexyl acrylate | -9.8 |
| Benzyl acrylate | -10.6 |
| Perfluoroalkylethyl acrylate | -10.2 |

The aqueous binder, prepared with one or more of octadecyl acrylate, octyl acrylate, heptadecyl acrylate, octadecyl methacrylate, cyclohexyl acrylate, benzyl acrylate or perfluoroalkylethyl acrylate as the functional monomer having special functional group having amphiphilicity and improving the flexibility of macromolecular chain, has a glass transition temperature of -9°C to -24°C.

The above is only the preferred embodiment of the present invention, and is not intended to limit the present invention.

## Claims

1. A preparation method of an aqueous binder for a positive electrode of a lithium ion battery, comprising using water as a dispersion medium, adding an acrylate monomer, an amphiphilic reactive emulsifier, a functional monomer having a special functional group for improving the flexibility of a macromolecular chain, and an initiator, stirring and uniformly mixing, heating to initiate polymerization, and reacting to obtain the aqueous binder; wherein the functional monomer is vinyl versatate.

2. The preparation method of claim 1, wherein the acrylate monomer is selected from one or more of methyl methacrylate, methyl acrylate, ethyl acrylate, butyl acrylate, hydroxyethyl acrylate, acrylonitrile, acrylic acid, methacrylic acid, acrylamide, itaconic acid, methacrylic acid, hydroxypropyl acrylate or octyl acrylate.

3. The preparation method of claim 1 or 2, wherein the amphiphilic reactive emulsifier is selected from one or more of sodium acrylamide isopropyl sulfonate, special alcohol ether sulfate containing allyl group, sodium alcohol ether sulfonyl succinate containing double bond, sodium allyloxy hydroxypropane sulfonate or sodium alkylamide vinyl sulfonate.

4. The preparation method of any one of claims 1-3, wherein the initiator is selected from one or more of an inorganic peroxygen initiator, an azo initiator, an organic peroxy initiator, a water-soluble redox initiator or an oil-soluble redox initiator.

5. The preparation method of claim 4, wherein the initiator is selected from one or more of azodiisobutyronitrile, benzoyl peroxide, sodium persulfate, ammonium persulfate, persulfate or sodium sulfite.

6. The preparation method of any one of claims 1-5, wherein the functional monomer is used in an amount accounting for 5% to 40% of the total amount of the monomers, and/or, the amphiphilic reactive emulsifier is used in an amount accounting for 0.1% to 8% of the total weight; and the aqueous binder has a solid content of 10% to 25%.

7. The preparation method of claim 6, wherein the amphiphilic reactive emulsifier is used in an amount accounting for 0.5% to 2% of the total weight.

8. The preparation method of any one of claims 1-7, wherein the stirring speed during the reaction is 200 to 800 rpm, and the initiation temperature is 40°C to 90°C.

9. An aqueous binder for a positive electrode of a lithium ion battery prepared by the preparation method of any one of claims 1-8, having a solid content of 10% to 25% and a viscosity ranging from 800 mPa·s to 20,000 mPa·s, having a glass transition temperature of less than -9°C, which can be measured using the method as described in the description.

10. The aqueous binder of claim 9 having a glass transition temperature of from -14°C to -24°C.

## Patentansprüche

1. Herstellungsverfahren eines wässrigen Bindemittels für eine positive Elektrode einer Lithium-Ionen-Batterie, umfassend ein Verwenden von Wasser als ein Dispersionsmedium, ein Zugeben eines Acrylatmonomers, eines amphiphilen reaktiven Emulgators, eines funktionellen Monomers, das eine spezielle funktionelle Gruppe zum Verbessern der Flexibilität einer makromolekularen Kette aufweist, und eines Initiators, ein Rühren und ein gleichmäßiges Mischen, ein Erhitzen, um eine Polymerisation zu initiieren, und ein Reagieren, um das wässrige Bindemittel zu erhalten; wobei das funktionelle Monomer Vinylversatat ist.

2. Herstellungsverfahren nach Anspruch 1, wobei das Acrylatmonomer aus Methylmethacrylat, Methylacrylat, Ethylacrylat, Butylacrylat, Hydroxyethylacrylat, Acrylnitril, Acrylsäure, Methacrylsäure, Acrylamid, Itaconsäure, Methacrylsäure, Hydroxypropylacrylat und/oder Octylacrylat ausgewählt ist.

3. Herstellungsverfahren nach Anspruch 1 oder 2, wobei der amphiphile reaktive Emulgator aus Natriumacrylamidisopropylsulfonat, Allylgruppe enthaltendem speziellem Alkoholethersulfat, Doppelbindung enthaltendem Natriumalkoholethersulfonylsuccinat, Natriumallyloxyhydroxypropansulfonat und/oder Natriumalkylamidvinylsulfonat ausgewählt ist.

4. Herstellungsverfahren nach einem der Ansprüche 1-3, wobei der Initiator aus einem anorganischen Persauerstoff-Initiator, einem Azo-Initiator, einem organischen Peroxy-Initiator, einem wasserlöslichen Redox-Initiator und/oder einem öllöslichen Redox-Initiator ausgewählt ist.

5. Herstellungsverfahren nach Anspruch 4, wobei der Initiator aus Azodiisobutyronitril, Benzoylperoxid, Natriumpersulfat, Ammoniumpersulfat, Persulfat und/oder Natriumsulfit ausgewählt ist.

6. Herstellungsverfahren nach einem der Ansprüche 1-5, wobei das funktionelle Monomer in einer Menge verwendet wird, die 5 % bis 40 % der Gesamtmenge der Monomere ausmacht, und/oder der amphiphile reaktive Emulgator in einer Menge verwendet wird, die 0,1 % bis 8 % des Gesamtgewichts ausmacht; und das wässrige Bindemittel einen Feststoffgehalt von 10 % bis 25 % aufweist.

7. Herstellungsverfahren nach Anspruch 6, wobei der amphiphile reaktive Emulgator in einer Menge verwendet wird, die 0,5 % bis 2 % des Gesamtgewichts ausmacht.

8. Herstellungsverfahren nach einem der Ansprüche 1-7, wobei die Rührgeschwindigkeit während der Reaktion 200 bis 800 U/min beträgt und die Initiationstemperatur 40 °C bis 90 °C beträgt.

9. Wässriges Bindemittel für eine positive Elektrode einer Lithium-Ionen-Batterie, hergestellt durch das Herstellungsverfahren nach einem der Ansprüche 1-8, das einen Feststoffgehalt von 10 % bis 25 % und eine Viskosität in einem Bereich von 800 mPa·s bis 20.000 mPa·s aufweist, das eine Glasübergangstemperatur von weniger als -9°C aufweist, die unter Verwendung des Verfahrens gemessen werden kann, das in der Beschreibung beschrieben ist.

10. Wässriges Bindemittel nach Anspruch 9, das eine Glasübergangstemperatur von - 14 °C bis -24 °C aufweist.

## Revendications

1. Procédé de préparation d'un liant aqueux pour une électrode positive d'une batterie au lithium-ion, comprenant l'utilisation de l'eau comme milieu de dispersion, l'ajout d'un monomère acrylate, d'un émulsifiant réactif amphiphile, d'un monomère fonctionnel ayant un groupe fonctionnel spécial permettant d'améliorer la flexibilité d'une chaîne macromoléculaire et un initiateur, agitant et mélangeant uniformément, chauffant pour amorcer la polymérisation, et réagissant pour obtenir le liant aqueux ; le monomère fonctionnel étant le versatat de vinyle.

2. Procédé de préparation selon la revendication 1, le monomère acrylate étant choisi parmi le méthacrylate de méthyle et/ou l'acrylate de méthyle et/ou l'acrylate d'éthyle et/ou l'acrylate de butyle et/ou l'acrylate d'hydroxyéthyle et/ou l'acrylonitrile et/ou l'acide acrylique et/ou l'acide méthacrylique et/ou l'acrylamide et/ou l'acide itaconique et/ou l'acide méthacrylique et/ou l'acrylate d'hydroxypropyle et/ou l'acrylate d'octyle.

3. Procédé de préparation selon la revendication 1 ou 2, l'émulsifiant réactif amphiphile étant choisi parmi l'acrylamide isopropyle sulfonate de sodium et/ou le sulfate d'alcool-éther spécial contenant un groupe allyle et/ou l'alcool éther sulfonyle succinate de sodium contenant une double liaison et/ou l'allyloxy hydroxypropane sulfonate de sodium et/ou l'alkylamide vinyle sulfonate de sodium.

4. Procédé de préparation selon l'une quelconque des revendications 1 à 3, l'initiateur étant choisi parmi un initiateur peroxygène inorganique et/ou un initiateur azoïque et/ou un initiateur peroxy organique et/ou un initiateur redox soluble dans l'eau et/ou un initiateur redox soluble dans l'huile.

5. Procédé de préparation selon la revendication 4, l'initiateur étant choisi parmi l'azodiisobutyronitrile et/ou le peroxyde de benzoyle et/ou le persulfate de sodium et/ou le persulfate d'ammonium et/ou le persulfate et/ou le sulfite de sodium.

6. Procédé de préparation selon l'une quelconque des revendications 1 à 5, le monomère fonctionnel étant utilisé en une quantité représentant 5 % à 40 % de la quantité totale des monomères, et/ou l'émulsifiant réactif amphiphile étant utilisé dans une quantité représentant 0,1 % à 8 % du poids total ; et le liant aqueux ayant une teneur en matières solides de 10 % à 25 %.

7. Procédé de préparation selon la revendication 6, l'émulsifiant réactif amphiphile étant utilisé en une quantité représentant 0,5 % à 2 % du poids total.

8. Procédé de préparation selon l'une quelconque des revendications 1 à 7, la vitesse d'agitation pendant la réaction étant de 200 à 800 tr/min, et la température d'initiation étant de 40 °C à 90 °C.

9. Liant aqueux pour une électrode positive d'une batterie au lithium-ion préparé par le procédé de préparation selon l'une quelconque des revendications 1 à 8, ayant une teneur en matières solides de 10 % à 25 % et une viscosité comprise dans la plage allant de 800 mPa·s à 20 000 mPa·s, ayant une température de transition vitreuse inférieure à -9 °C, qui peut être mesurée à l'aide du procédé tel que décrit dans la description.

10. Liant aqueux selon la revendication 9, ayant une température de transition vitreuse allant de -14 °C à -24 °C.
